# EUROPÄISCHE PATENTSCHRIFT

(11) **EP 2 641 220 B1**
(45) Veröffentlichungstag und Bekanntmachung des Hinweises auf die Patenterteilung: **11.05.2016**
(21) Anmeldenummer: 11770431.2
(22) Anmeldetag: 17.10.2011
(51) Int. Cl.: G06Q 30/00, G06Q 10/00

(54) **KOMMUNIKATIONSNETZWERK ZUM ANBAHNEN VON KONTAKTEN**
COMMUNICATION NETWORK FOR INITIATING CONTACTS
RÉSEAU DE COMMUNICATION POUR ENGAGER DES CONTACTS

(30) Priorität: 18.11.2010 DE 202010015523 U
(43) Veröffentlichungstag der Anmeldung: 25.09.2013
(73) Patentinhaber: MeetNow! GmbH, 72461 Albstadt (DE)
(72) Erfinder: KREIGER, Michael, 65710 Hofheim (DE)
(74) Vertreter: Ruckh, Rainer Gerhard
(86) Internationale Anmeldenummer: PCT/EP2011/068051
(87) Internationale Veröffentlichungsnummer: WO 2012/065794

(56) Entgegenhaltungen:
- EP-A1- 1 587 014
- US-A1- 2003 036 958
- US-A1- 2006 109 083

## Beschreibung

Die Erfindung betrifft ein Kommunikationsnetzwerk.

Derartige Kommunikationsnetzwerke nutzen typischerweise das Internet, wobei die Teilnehmer des Kommunikationsnetzwerks Profile mit persönlichen Daten zur Verfügung stellen, die von einem oder mehreren Webservern als Netzwerkrechnereinheit verwaltet werden. Für die Profile können Zugangsbeschränkungen hinterlegt werden, so dass beispielsweise nur bestimmte Personen, die vom Inhaber des Profils ausgewählt werden, Zugang zu diesen Profilen erhalten. Ein Beispiel für ein derartiges Kommunikationsnetzwerk ist das weltweit verbreitete Netzwerk Facebook.

Generell funktioniert das Kommunikationsnetzwerk derart, dass die Teilnehmer ihre Personalcomputer, Laptops, Tablet-PCS, Mobiltelefone, insbesondere Smart Phones, als Kommunikationseinheiten innerhalb des Kommunikationsnetzwerks nutzen, wobei die Teilnehmer über das Kommunikationsnetzwerk Daten austauschen um miteinander zu kommunizieren. Mit dem von den Teilnehmern definierten Profilen bestimmen sie dabei, wieviel private Informationen sie anderen Teilnehmern bekannt werden lassen möchten.

Derartige Kommunikationsnetzwerke werden insbesondere auch dazu genutzt, um Kontakte mit anderen Menschen zu knüpfen. Im einfachsten Fall besteht ein Erstkontakt in einem persönlichen Treffen zweier Personen, wobei die Personen persönlich Daten betreffend das Kommunikationsnetzwerk austauschen, so dass dann die beiden Personen zu späteren Zeitpunkten über das Kommunikationsnetzwerk miteinander kommunizieren können. Eine alternative Methode besteht darin, dass im Verlauf einer über das Kommunikationsnetzwerk durchgeführten Kommunikation eine zunächst unbekannte Person eine Anfrage an eine weitere Person zur Kontaktaufnahme richtet. Diese anonyme Kontaktaufnahme wird jedoch oftmals missbraucht und ist daher mit erheblichen Risiken verbunden.

Aus der US 2006/0109083 A1 ist ein Kommunikationsnetzwerk bekannt, für welcher eine von einer Person nutzbare mobile Kommunikationseinheit vorgesehen ist. Mit dieser Kommunikationseinheit kann die Person eine Kennung wie einen Barcode lesen, den eine Zielperson mit sich führt. Durch Lesen des Barcodes erhält die Person Information über das Profil der Zielperson.

Der Erfindung liegt die Aufgabe zugrunde, ein Kommunikationsnetzwerk mit erweiterter Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Kommunikationsnetzwerk umfasst eine einer anfragenden Person zugeordnete mobile Kommunikationseinheit, die eine Rechnereinheit, eine Leseeinheit und Mittel zum Senden von Daten aufweist. Mit der Leseeinheit ist ein Code einer Zielperson erfassbar. Der Code enthält eine Identifikation der Zielperson. Die Identifikation wird von der mobilen Kommunikationseinheit der anfragenden Person an eine Netzwerkrechnereinheit gesendet, welche anhand der Identifikation eine Anfrage der anfragenden Person an eine Kommunikationseinheit der Zielperson richtet. Die Anfrage an die Zielperson beinhaltet eine Freigabe von Kontaktdaten der anfragenden Person an die Zielperson. Auf eine Anfrage der anfragenden Person sendet die Zielperson mit der Kommunikationseinheit eine Bestätigung oder Ablehnung der Anfrage an die Netzwerkrechnereinheit. Diese wird von der Netzwerkrechnereinheit an die mobile Kommunikationseinheit der anfragenden Person weitergeleitet. Mit einer Bestätigung erfolgt eine Freigabe von Kontaktdaten der Zielperson für die anfragende Person. Mit einer Ablehnung der Anfrage kommt kein Kontakt mit der Zielperson zustande, so dass die Zielperson von der anfragenden Person unerkannt bleibt. Weiterhin wird eine innerhalb eines vorgegebenen Zeitintervalls auf eine Anfrage der anfragenden Person erfolgende Anfrage der Zielperson an die anfragende Person als Bestätigung der Anfrage der anfragenden Person gewertet.

Bei dem erfindungsgemäßen Kommunikationsnetzwerk wird eine neuerartige Möglichkeit der Erstkontaktaufnahme zweier Teilnehmer dieses Kommunikationsnetzwerks bereitgestellt. Hierzu trägt ein Teilnehmer für andere sichtbar einen Code mit sich, wobei entweder der Code selbst oder ein Hinweis auf diesen sichtbar ist und von anderen Personen als solcher erkannt werden kann. Der Code kann beispielsweise auf der Kleidung der Person direkt oder mit einem Anhänger aufgebracht sein. Auch ein Aufbringen des Codes auf einer Visitenkarte oder sonstigen Gebrauchsgegenständen ist möglich.

Möchte ein weiterer Teilnehmer mit diesem als Zielperson Kontakt aufnehmen, so kann er als anfragende Person mit seiner von ihm mitgeführten mobilen Kommunikationseinheit, insbesondere einem Mobiltelefon wie einem Smart Phone, den Code der Zielperson lesen. Hierzu ist in der mobilen Kommunikationseinheit eine geeignete Leseeinheit integriert.

Der Code, der von der mobilen Kommunikationseinheit der anfragenden Person gelesen wird, enthält eine Identifikation, die die Zielperson, vorzugsweise innerhalb des Kommunikationsnetzwerks, eindeutig identifiziert. Diese Identifikation wird an eine Netzwerkrechnereinheit des Kommunikationsnetzwerks gesendet, wobei die Netzwerkrechnereinheit eine Anfrage an die Zielperson richtet, ob sie Kontakt mit der anfragenden Person aufnehmen möchte. Die Zielperson, die die Anfrage erhält, kann die Anfrage ablehnen oder annehmen. Lehnt sie die Anfrage ab, kommt kein Kontakt mit der Zielperson zustande, die Zielperson bleibt so von der anfragenden Person unerkannt. Nimmt die Zielperson die Anfrage an, kommt ein Kontakt zwischen den beiden Personen zustande, so dass diese als untereinander bekannte Teilnehmer des Kommunikationsnetzwerks innerhalb dieses Netzwerks miteinander kommunizieren können.

Die Erfindung bietet eine einfach handhabbare und effiziente Möglichkeit der Kontaktaufnahme zweier Teilnehmer des Kommunikationsnetzwerks, und zwar auf der Basis eines persönlichen ersten Aufeinandertreffens. Bei einem solchen Aufeinandertreffen zweier Personen kann aus vielerlei Gründen keine Gelegenheit für ein persönliches Gespräch, das die einfachste Möglichkeit einer Kontaktaufnahme wäre, bestehen. Beispielsweise kann eine flüchtige, zufällige Begegnung zweier Personen auf Flughäfen, Bahnhöfen, in Kaufhäusern oder auch in Studien, bei Sport- oder Musikveranstaltungen erfolgen, die für eine verbale Kommunikation keine Gelegenheit bieten. Durch das Lesen des Codes der Zielperson kann die anfragende Person jedoch schnell die Identifikation der Zielperson erfassen um so eine Kontaktaufnahme über das Kommunikationsnetzwerk zu initialisieren. Dadurch wird mit der vorliegenden Erfindung die Funktionalität des Kommunikationsnetzwerks erheblich erweitert.

Bei der Anfrage der anfragenden Person durch das Lesen des Codes und auch bei der darauffolgenden Antwort der Zielperson wird vorteilhaft der Umstand ausgenutzt, dass auf der oder den Netzwerkrechnereinheiten des Kommunikationsnetzwerks für die Teilnehmer bestimmte Profile mit persönlichen Daten hinterlegt sind, die bei erteilter Freigabe von Dritten eingesehen werden können.

Dann ist es besonders vorteilhaft, wenn bereits die Anfrage an die Zielperson eine Freigabe von Kontaktdaten der anfragenden Person an die Zielperson beinhaltet, wobei der Umfang der Freigabe der Kontaktdaten durch die anfragende Person vorgebbar ist.

Damit kann sich die Zielperson anhand der von der anfragenden Person freigegebenen Kontaktdaten bereits frühzeitig ein Bild von der anfragenden Person machen und insbesondere auch anhand der Kontaktdaten beurteilen, ob sie mit der anfragenden Person weiter in Kontakt treten möchte.

Umgekehrt kann auch mit einer Bestätigung eine Freigabe von Kontaktdaten der Zielperson für die anfragende Person erfolgen.

Damit erhält auch die anfragende Person von der Zielperson weitergehende Informationen.

Eine alternative Ausführungsform der Kontaktherstellung mittels des erfindungsgemäßen Codes berücksichtigt den Fall, dass bei einem Aufeinandertreffen zweier Personen jede der Personen den Code der jeweils anderen Person mit der Leseeinheit seiner mobilen Kommunikationseinheit erfasst. In diesem Fall wird davon ausgegangen, dass bereits vorab Einvernehmen darüber besteht, dass die beiden Personen häufig über das Kommunikationsnetzwerk in Kontakt treten möchten. Diesem Umstand wird in der Netzwerkrechnereinheit dadurch Rechnung getragen, dass das Registrieren von Anfragen beider Personen durch Senden der Identifikation der jeweils anderen Person innerhalb eines vorgegebenen Zeitintervalls als beiderseitige Kontaktbestätigung gewertet wird, so dass dann über die Netzwerkrechnereinheit unmittelbar der Kontakt zwischen den beiden Personen freigegeben wird.

Gemäß einer besonders vorteilhaften Ausführungsform der Erfindung ist der Code eine ein Kontrastmuster aufweisende Marke, und die Leseeinheit ein optischer Scanner, wobei die Marke ein Barcode oder ein QR-Code ist.

Alternativ ist der Code ein RFID-Code, und die Leseeinheit ein RFID-Lesegerät.

Die Erfindung wird im Folgenden anhand der Zeichnungen erläutert. Es zeigen:
- Figur 1:: Schematische Darstellung von Komponenten des erfindungsgemäßen Kommunikationsnetzwerks.
- Figur 2:: Variante der Anordnung gemäß Figur 1.

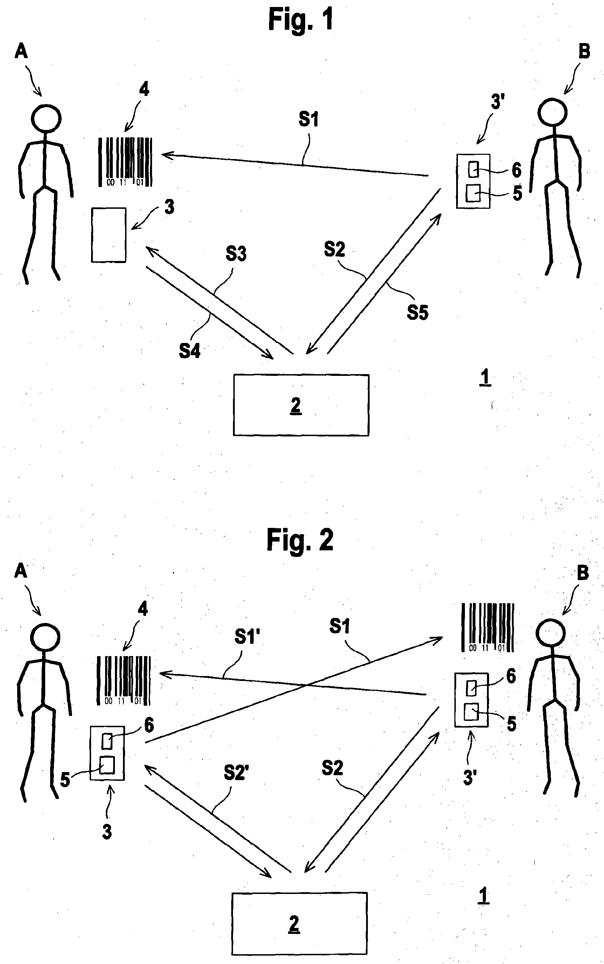

Figur 1 zeigt schematisch Komponenten des erfindungsgemäßen Kommunikationsnetzwerks 1. Das Kommunikationsnetzwerk 1 ermöglicht eine Kommunikation von Teilnehmern untereinander, wobei die Kommunikation im vorliegenden Fall durch Senden von Daten über das Internet erfolgt. In Netzwerkrechnereinheiten 2, die von Webservern gebildet sind, wobei in Figur 1 eine dieser Netzwerkrechnereinheiten 2 dargestellt ist, sind Profile mit Daten der Teilnehmer hinterlegt und werden dort verwaltet. Die Teilnehmer erhalten über Kommunikationseinheiten Zugang zu den Kommunikationsnetzwerken 1 und können untereinander Daten austauschen. Insbesondere können bei teilweiser oder vollständiger Freigabe der Profile durch die jeweiligen Personen, denen die Profile gehören, andere Teilnehmer Zugang zu den erhaltenen Profilen erlangen.

Die Kommunikationseinheiten können prinzipiell Personalcomputer und dergleichen sein. Insbesondere können die Kommunikationseinheiten als mobile Kommunikationseinheiten 3, 3' ausgebildet sein, beispielweise in Form von Laptops, Tablet-PCS oder Mobiltelefonen, insbesondere Smart Phones.

Figur 1 zeigt eine Netzwerkrechnereinheit 2 und zwei Teilnehmer des Kommunikationsnetzwerks 1, die jeweils eine mobile Kommunikationseinheit 3, 3' in Form eines Mobiltelefons mit sich führen. Generell umfasst das Kommunikationsnetzwerk 1 mehrere Netzwerkrechnereinheiten 2 mit einer Vielzahl von zugeordneten Kommunikationseinheiten beziehungsweise mobilen Kommunikationseinheiten 3,3'.

Das Beispiel von Figur 1 zeigt zwei Teilnehmer des Kommunikationsnetzwerks 1, wobei ein erster Teilnehmer eine Zielperson A darstellt und der zweite Teilnehmer eine anfragende Person B darstellt. Die Zielperson A trägt sichtbar einen Code in Form eines Barcodes (4, 4'). Anstelle des Barcodes (4, 4') kann die Zielperson A auch eine andere Marke mit einem Kontrastmuster tragen, beispielsweise einen QR-Code oder dergleichen. Die Zielperson A kann den Barcode (4, 4') auf der Kleidung aufgedruckt tragen. Auch ein Anstecker in Form einer Plakette, auf welcher der Barcode (4, 4') aufgebracht ist, ist möglich. Auch kann die Zielperson A einen Gebrauchsgegenstand wie eine Visitenkarte mit sich führen, auf welcher der Barcode (4, 4') aufgebracht ist.

Im Barcode (4, 4') ist eine Identifikation kodiert, welche die Zielperson A innerhalb des Kommunikationswerks 1 eindeutig identifiziert. Die Identifikation kann beispielsweise ein Link auf das Profil der Zielperson A im Kommunikationsnetzwerk 1 sein. Weiterhin kann die Identifikation auch eine Email-Adresse oder dergleichen sein.

Die als Smart Phone ausgebildete mobile Kommunikationseinheit 3` der anfragenden Person B weist in bekannter Weise die Komponenten eines Mobiltelefons sowie eine Rechnereinheit 5 mit Softwaremodulen auf, die den Kontakt zum Internet und insbesondere zum Kommunikationsnetzwerk 1 herstellen. Zusätzlich weist die mobile Kommunikationseinheit 3' der anfragenden Person B eine Leseeinheit in Form eines optischen Scanners auf, mittels dessen Barcodes 4, 4` erfassbar sind. Insbesondere ist innerhalb eines bestimmten Leseabstands auch der Barcode 4, 4` der Zielperson A erfassbar. Ein mit der Leseeinheit erfassbar Barcode 4, 4' wird in der Rechnereinheit 5 der mobilen Kommunikationseinheit 3 ausgewertet, das heißt dekodiert. Hierzu weist die Rechnereinheit 5 der mobilen Kommunikationseinheit 3 ein geeignetes Softwaremodul auf

Begegnen sich die Zielpersonen A und die anfragenden Personen B beispielsweise bei einer Großveranstaltung flüchtig, so dass für eine Kontaktaufnahme in Form eines persönlichen Gesprächs keine Gelegenheit oder keine Zeit ist, so kann die anfragende Person B eine Kontaktaufnahme über das Kommunikationsnetzwerk 1 versuchen anzubahnen, in dem sie mit der Leseeinheit der mobilen Kommunikationseinheit 3' den von der Zielperson A sichtbar getragenen Barcode 4, 4' abscannt, das heißt erfasst. Dieser Vorgang ist mit dem in Figur 1 mit S1 bezeichneten Pfeil gekennzeichnet, der den ersten Schritt der Kontaktaufnahme darstellt. In der Rechnereinheit 5 der mobilen Kommunikationseinheit 3' wird der Barcode 4, 4` dekodiert und damit die Identifikation der Zielperson A, die im Barcode 4, 4' kodiert ist, ausgelesen.

In einem weiteren, in Figur 1 mit S2 bezeichneten Schritt richtet die anfragende Person B an die Netzwerkrechnereinheit 2 eine Anfrage, in dem sie die Identifikation der Zielperson A an die Netzwerkrechnereinheit 2 sendet. Prinzipiell kann hierzu eine aktive Auslösung über die mobile Kommunikationseinheit 3' erforderlich sein. Besonders vorteilhaft weist die mobile Kommunikationseinheit 3' der anfragenden Person B ein Softwaremodul auf, das nach Erfassen der Identifikation der Zielperson A selbsttätig die Identifikation an die Netzwerkrechnereinheit 2 sendet. Die anfragende Person B erhält dann auf ihrer mobilen Kommunikationseinheit 3' als Quittierung die Meldung, dass der Kontaktwunsch gesendet wurde, und dass auf eine Bestätigung gewartet wird.

Mit dem Senden der Identifikation an die Netzwerkrechnereinheit 2 kann zugleich von der mobilen Kommunikationseinheit 3' aus eine Freigabe des Profils der anfragenden Person B für die anzufragende Zielperson A verbunden sein. Diese Funktion ist vorab an der mobilen Kommunikationseinheit 3' einstellbar, wobei generell auch nur eine teilweise Freigabe des Profils möglich ist.

In einem dritten, in Figur 1 mit S3 bezeichneten Schritt sendet die Netzwerkrechnereinheit 2 die Anfrage der anfragenden Person B unter Verwendung der Identifikation an die mobile Kommunikationseinheit 3` der Zielperson A weiter. Dort erscheint die Anfrage der Zielperson A als Nachricht.

Die Zielperson A entscheidet dann, ob sie die Anfrage, das heißt den Kontaktwunsch der anfragenden Person B annimmt oder nicht. Da gegebenenfalls mit der Anfrage der anfragenden Person B auch eine Freigabe von Kontaktdaten des Profils der anfragenden Person B freigegeben ist, kann sich die Zielperson A für ihre Entscheidung durch Zugang zu dem Profil über die anfragende Person B informieren.

Lehnt die Zielperson A den Kontaktwunsch der anfragenden Person B ab, ist der Kontakt zwischen Zielperson A und anfragender Person B beendet. Die Zielperson A bleibt für die anfragende Person B unerkannt. Die Ablehnung des Kontaktwunsches wird dabei von der mobilen Kommunikationseinheit 3 der Zielperson A an die Netzwerkrechnereinheit 2 gesendet, (Schritt S4 in Figur 1), die die Ablehnung als Nachricht an die mobile Kommunikationseinheit 3' weiterleitet (Schritt S5 in Figur 1), wonach die Kommunikation zwischen anfragender Person B und Zielperson A beendet ist.

Nimmt dagegen die Zielperson A den Kontaktwunsch der anfragenden Person B an, so sendet die Zielperson A mittels der mobilen Kommunikationseinheit 3 eine entsprechende Nachricht an die Netzwerkrechnereinheit 2 (Schritt S4 in Figur 1). Vorteilhaft kann mit dieser Nachricht eine Freigabe von Teilen des Profils oder des gesamten Profils der Zielperson A mitgesendet werden, wobei dies eine in der mobilen Kommunikationseinheit 3 einstellbare Funktion ist. Damit entscheidet die Zielperson A, welche persönlichen Daten ihres Profils auf der Netzwerkrechnereinheit 2 sie für die anfragende Person B zur Verfügung stellen möchte. Die Annahme des Kontaktwunschs der anfragenden Person B durch die Zielperson A wird darauf von der Netzwerkrechnereinheit 2 an die mobile Kommunikationseinheit 3' der anfragenden Person B gesendet (Schritt S5 in Figur 1). Durch die an die anfragende Person B weiter gesendete Annahme wird über die Netzwerkrechnereinheit 2 der direkte Kontakt zwischen der anfragenden Person B und der Zielperson A freigegeben. Generell können hierzu die Rufnummern und Email-Adressen der anfragenden Person B und Zielperson A gegenseitig durch die Netzwerkrechnereinheit 2 bekanntgegeben werden. Insbesondere erhält durch die Netzwerkrechnereinheit 2 die anfragende Person B Zugang zu dem Profil der Zielperson A und umgekehrt die Zielperson A Zugang zum Profil der anfragenden Person B.

Figur 2 zeigt eine Variante der Anordnung gemäß Figur 1. Die Anordnung gemäß Figur 2 ist gegenüber der Anordnung von Figur 1 dahingehend erweitert, dass nicht nur die Zielperson A einen Barcode 4 trägt, vielmehr trägt auch die anfragende Person B einen Barcode 4'. Entsprechend weist sowohl die mobile Kommunikationseinheit 3 der Zielperson A als auch die mobile Kommunikationseinheit 3' der anfragenden Person B neben einer Rechnereinheit 5 auch eine Leseeinheit zum Lesen von Barcodes 4,4' auf.

Begegnen sich die anfragende Person B und die Zielperson A zufällig, so kann der Fall auftreten, dass nicht nur die anfragende Person B mit ihrer mobilen Kommunikationseinheit 3' den Barcode 4 der Zielperson A abtastet (Schritt S1 in Figur 1). Vielmehr erfasst nahezu gleichzeitig oder in engem zeitlichen Bezug hierzu auch die Zielperson A mit ihrer mobilen Kommunikationseinheit 3 den Barcode 4' der anfragenden Person B (Schritt S1' in Figur 2).

In diesem Fall wird in engem zeitlichen Bezug sowohl von der anfragenden Person B anhand der gelesenen Identifikation der Zielperson A eine Anfrage an die Netzwerkrechnereinheit 2 gestellt (Schritt S2 in Figur 2) als auch von der Zielperson A anhand der gelesenen Identifikation der anfragenden Person B eine Anfrage an die Netzwerkrechnereinheit 2 gestellt (Schritt S2' in Figur 2).

Erkennt die Netzwerkrechnereinheit 2 die gegenseitigen Anfragen von anfragender Person B und Zielperson A innerhalb eines vorgegebenen Zeitintervalls, das typischerweise nur wenige Sekunden beträgt, so wertet die Netzwerkrechnereinheit 2 dies als gegenseitige Zustimmung von anfragender Person B und Zielperson A zur Kontaktaufnahme und gibt daher unmittelbar ohne weitere Zwischenschritte den gegenseitigen Kontakt zwischen Zielperson A und anfragender Person B frei.

Hierzu sendet die Netzwerkrechnereinheit 2 sowohl an die anfragende Person B eine Kontaktbestätigung und Freigabe des Profils der Zielperson A sowie gegebenenfalls deren Telefonnummern und Email-Adressen (Schritt S3 in Figur 2), als auch an die Zielperson A eine Kontaktbestätigung und Freigabe des Profils der anfragenden Person B sowie gegebenenfalls deren Telefonnummern und Email-Adressen (Schritt S3' in Figur 2). Bei der Freigabe der Profile der Zielperson A und anfragenden Person B werden dabei in der Netzwerkrechnereinheit 2 hinterlegte Defaulteinstellungen, die den Umfang der Freigabe der Profile definieren, verwendet.

Die darauffolgende Kommunikation zwischen anfragender Person B und Zielperson A erfolgt dann direkt über deren mobile Kommunikationseinheiten 3, 3`. Die Netzwerkrechnereinheit 2 wird nur noch über diese Kommunikation informiert,

### Bezugszeichenliste

- (1): Kommunikationsnetzwerk
- (2): Netzwerkrechnereinheit
- (3, 3'): mobile Kommunikationseinheit
- (4, 4'): Barcode
- (5): Rechnereinheit
- (A): Zielperson
- (B): anfragende Person

## Patentansprüche

1. Kommunikationsnetzwerk (1) mit einer einer anfragenden Person (B) zugeordneten mobilen Kommunikationseinheit (3`), welche eine Rechnereinheit (5), eine Leseeinheit und Mittel zum Senden von Daten umfasst, wobei mit der Leseeinheit ein Code einer Zielperson (A) erfassbar ist, wobei der Code eine Identifikation der Zielperson (A) enthält, wobei die Identifikation von der mobilen Kommunikationseinheit (3') der anfragenden Person an eine Netzwerkrechnereinheit (2) gesendet wird, welche anhand der Identifikation eine Anfrage der anfragenden Person (B) an eine Kommunikationseinheit der Zielperson (A) richtet, **dadurch gekennzeichnet, dass** die Anfrage an die Zielperson (A) eine Freigabe von Kontaktdaten der anfragenden Person (B) an die Zielperson (A) beinhaltet, dass auf eine Anfrage der anfragenden Person (B) die Zielperson (A) mit der Kommunikationseinheit (3') eine Bestätigung oder Ablehnung der Anfrage an die Netzwerkrechnereinheit (2) sendet, wobei diese von der Netzwerkrechnereinheit (2) an die mobile Kommunikationseinheit (3') der anfragenden Person (B) weitergeleitet wird, dass mit einer Bestätigung eine Freigabe von Kontaktdaten der Zielperson (A) für die anfragende Person (B) erfolgt, und dass mit einer Ablehnung der Anfrage kein Kontakt mit der Zielperson (A) zustande kommt, so dass die Zielperson (A) von der anfragenden Person unerkannt bleibt, und dass eine innerhalb eines vorgegebenen Zeitintervalls auf eine Anfrage der anfragenden Person (B) erfolgende Anfrage der Zielperson (A) an die anfragende Person (B) als Bestätigung der Anfrage der anfragenden Person (B) gewertet wird.

2. Kommunikationsnetzwerk nach Anspruch 1, **dadurch gekennzeichnet, dass** der Code von der Zielperson (A) sichtbar mitgeführt ist.

3. Kommunikationsnetzwerk nach einem der Ansprüche 1 oder 2, **dadurch gekennzeichnet, dass** der Code eine ein Kontrastmuster aufweisende Marke ist, und dass die Leseeinheit ein optischer Scanner ist, und dass die Marke ein Barcode (4,4') oder ein QR-Code ist.

4. Kommunikationsnetzwerk nach einem der Ansprüche 1 oder 2, **dadurch gekennzeichnet, dass** der Code ein RFID-Code ist, und dass die Leseeinheit ein RFID-Lesegerät ist.

5. Kommunikationseinheit nach einem der Ansprüche 1 bis 4, **dadurch gekennzeichnet, dass** die Kommunikationseinheit der Zielperson (A) eine mobile Kommunikationseinheit (3) ist, welche Mittel zum Senden von Daten aufweist.

6. Kommunikationsnetzwerk nach einem der Ansprüche 1 bis 5, **dadurch gekennzeichnet, dass** die oder jede mobile Kommunikationseinheit (3, 3`) ein Mobiltelefon, ein Smart Phone, Tablet-PC oder ein Laptop ist.

7. Kommunikationsnetzwerk nach einem der Ansprüche 1 bis 6, **dadurch gekennzeichnet, dass** die Übertragung von Daten über das Internet erfolgt.

8. Kommunikationsnetzwerk nach Anspruch 7, **dadurch gekennzeichnet, dass** die Netzwerkrechnereinheit (2) ein Webserver ist.

9. Kommunikationsnetzwerk nach einem der Ansprüche 1 bis 8, **dadurch gekennzeichnet, dass** der Umfang der Freigabe der Kontaktdaten vorgebbar ist.

10. Kommunikationsnetzwerk nach einem der Ansprüche 1 bis 9, **dadurch gekennzeichnet, dass** Kontaktdaten in Form von Profilen in der Netzwerkrechnereinheit (2) hinterlegt sind und dort verwaltet werden.

## Claims

1. Communications network (1) with a mobile communications unit (3'), which is assigned to an enquirer (B) and which comprises a computer unit (5), a reader unit and means for transmitting data, wherein a code of an addressee (A) is detectable by the reader unit, wherein the code contains an identification of the addressee (A), wherein the identification is transmitted by the mobile communications unit (3') of the enquirer to a network computer unit (2), which on the basis of the identification directs an enquiry of the enquirer (B) to a communications unit of the addressee (A), **characterised in that** the enquiry made to the addressee (A) includes a release of contact data of the enquirer (B) to the addressee (A), that when an enquiry is made by the enquirer (B) the addressee (A) transmits by the communications unit (3') a confirmation or rejection of the enquiry to the network computer unit (2), wherein this is passed on by the network computer unit (2) to the mobile communications unit (3') of the enquirer (B), that when an acknowledgement is made a release of contact data of the addressee (A) for the enquirer (B) takes place and that when a rejection of the enquiry is made no contact with the addressee (A) comes into being, so that the addressee (A) remains unknown to the enquirer and that an enquiry, which takes place within a predetermined time interval from an enquiry of the enquirer (B), of the addressee (A) made to the enquirer (B) assessed as confirmation of the enquiry of the enquirer (B).

2. Communications network according to claim 1, **characterised in that** the code is carried by the addressee (A) to be visible.

3. Communications network according to one of claims 1 and 2, **characterised in that** the code is a mark having a contrast pattern, that the reader unit is an optical scanner and that the mark is a barcode (4, 4') or a QR code.

4. Communications network according to one of claims 1 and 2, **characterised in that** the code is an RFID code and that the reader unit is an RFID reader.

5. Communications network according to any one of claims 1 to 4, **characterised in that** the communications unit of the addressee (A) is a mobile communications unit (3), which comprises means for transmitting data.

6. Communications network according to any one of claims 1 to 5, **characterised in that** the or each mobile communications unit (3, 3') is a mobile telephone, a smartphone, a tablet PC or a laptop.

7. Communications network according to any one of claims 1 to 6, **characterised in that** the transmission data takes place by way of the Internet.

8. Communications network according to claim 7, **characterised in that** the network computer unit (2) is a web server.

9. Communications network according to any one of claims 1 to 8, **characterised in that** the extent of release of the contact data is presettable.

10. Communications network according to any one of claims 1 to 9, **characterised in that** the contact data are filed in the form of profiles in the network computer unit (2) and are managed there.

## Revendications

1. Réseau de communication (1) équipé d'une unité mobile de communication (3') associée à une personne demandeuse (B) et comprenant une unité de calcul (5), une unité de lecture et des moyens dédiés à l'envoi de données, l'unité de lecture permettant de détecter un code d'une personne ciblée (A), ledit code renfermant une identification de ladite personne ciblée (A), laquelle identification est envoyée, par l'unité mobile de communication (3') de la personne demandeuse, à une unité calculatrice (2) du réseau qui adresse une requête de ladite personne demandeuse (B) à une unité de communication de ladite personne ciblée (A), sur la base de ladite identification, **caractérisé par le fait que** la requête formulée à la personne ciblée (A) renferme une délivrance de données de contact de la personne demandeuse (B) à ladite personne ciblée (A) ; que, dans la continuité d'une requête de ladite personne demandeuse (B), ladite personne ciblée (A) envoie à l'unité calculatrice (2) du réseau, au moyen de l'unité de communication (3'), une confirmation ou un rejet de ladite requête qui est retransmis(e), par ladite unité calculatrice (2) du réseau, à l'unité mobile de communication (3') de ladite personne demandeuse (B) ; qu'une confirmation gouverne une délivrance de données de contact de ladite personne ciblée (A) à l'adresse de ladite personne demandeuse (B) ; qu'aucun contact n'est établi avec ladite personne ciblée (A) en cas de rejet de la requête, si bien que ladite personne ciblée (A) demeure inconnue de ladite personne demandeuse ; et qu'une requête de ladite personne ciblée (A), formulée à ladite personne demandeuse (B) dans les limites d'un intervalle de temps préétabli succédant à une requête de ladite personne demandeuse (B), est évaluée comme une confirmation de ladite requête de ladite personne demandeuse (B).

2. Réseau de communication selon la revendication 1, **caractérisé par le fait que** le code est porté de façon visible par la personne ciblée (A).

3. Réseau de communication selon l'une des revendications 1 ou 2, **caractérisé par le fait que** le code est un repère muni d'un motif contrasté ; que l'unité de lecture est un scanneur optique ; et que ledit repère est un code à barres (4, 4') ou un code QR.

4. Réseau de communication selon l'une des revendications 1 ou 2, **caractérisé par le fait que** le code est un code RFID ; et que l'unité de lecture est un lecteur RFID.

5. Réseau de communication selon l'une des revendications 1 à 4, **caractérisé par le fait que** l'unité de communication de la personne ciblée (A) est une unité mobile de communication (3) équipée de moyens dévolus à l'envoi de données.

6. Réseau de communication selon l'une des revendications 1 à 5, **caractérisé par le fait que** l'unité, ou chaque unité mobile de communication (3, 3') est un téléphone cellulaire, un ordiphone, une tablette tactile ou un ordinateur portable.

7. Réseau de communication selon l'une des revendications 1 à 6, **caractérisé par le fait que** la transmission de données a lieu via Internet.

8. Réseau de communication selon la revendication 7, **caractérisé par le fait que** l'unité calculatrice (2) du réseau est un serveur sur la Toile.

9. Réseau de communication selon l'une des revendications 1 à 8, **caractérisé par le fait que** le volume de la délivrance des données de contact peut être préétabli.

10. Réseau de communication selon l'une des revendications 1 à 9, **caractérisé par le fait que** des données de contact sont stockées, sous la forme de profils, dans l'unité calculatrice (2) du réseau dans laquelle elles sont gérées.
